# EUROPÄISCHE PATENTANMELDUNG

(11) **EP 2 392 610 A1**
(43) Veröffentlichungstag der Anmeldung: **07.12.2011**
(21) Anmeldenummer: 10164751.9
(22) Anmeldetag: 02.06.2010
(51) Int. Cl.: C08J 5/12, C08K 5/00, C08K 5/3492, C08G 81/02, B29C 45/16

(54) **Neue Thermoplast-Kautschuk-Mehrkomponenten-Systeme**

(71) Anmelder: Lanxess Deutschland GmbH, 51369 Leverkusen (DE)
(72) Erfinder: Soddemann, Matthias, Dr., 51503 Rösrath-Hoffnungsthal (DE); Schulte, Maik, 58119 Hagen (DE); Margraf, Günter, 41539 Dormagen (DE); Roos, Andreas, Dr., 40547 Düsseldorf (DE); Thust, Torsten, 49565 Bramsche (DE); Giese, Ulrich, Prof. Dr., 31191 Algermissen (DE)

(57) **Zusammenfassung**

Die vorliegende Erfindung betrifft ein Mehrkomponenten-System aus einer Thermoplast-Komponente und einer Kautschuk-Komponente, wobei die Thermoplast-Komponente wenigstens ein Vernetzungsadditiv enthält, sowie ein Verfahren zur Herstellung von Thermoplastkautschuk-Verbund-Formteilen unter Einsatz des Mehrkomponenten-Systems sowie die dabei erhaltenen Thermoplastkautschuk-Verbund-Formteile.

## Beschreibung

Die Erfindung betrifft ein Mehrkomponenten-System aus einer Thermoplast-Komponente und einer Kautschuk-Komponente, wobei die Thermoplast-Komponente mindestens ein Vernetzungsadditiv enthält, sowie das Verfahren zur Herstellung von Thermoplastkautschuk-Verbund-Formteilen unter Einsatz des Mehrkomponenten-Systems, sowie die dabei erhaltenen Thermoplastkautschuk-Verbund-Formteile.

Aufgrund des unterschiedlichen chemischen Aufbaues von Thermoplast- bzw. Kautschuk-Komponenten und deren gegensätzlichen Verarbeitungsmethoden sind Verfahren zur Herstellung von stoffschlüssigen Kautschuk-Kunststoff-Verbundgegenständen häufig mit Schwierigkeiten im Hinblick auf die spätere Haftfestigkeit zwischen den beiden Komponenten und der Beständigkeit des Verbunds beider Werkstoffe zu optimieren.

Verbundwerkstoffe aus thermoplastisch steifen und gummielastischen Formstoffen werden häufig durch Kleben, Verschrauben, Nieten, mechanisches Verkrallen oder unter Verwendung eines Primers und/oder Haftvermittlers bzw. Oberflächenmodifikationen wie z.B.
- das Beflammen,
- die Koronaentladung,
- die Plasmamodifizierung,
- die Gasphasenfluorierung ,
zusammengefügt und zur Haftung gebracht.

Dabei handelt es sich üblicherweise um dreistufige Verfahren, bei denen die beiden Formteile in zwei separaten Schritten jeweils einzeln hergestellt und im dritten Schritt zur Erzielung oder Steigerung der Haftfestigkeit über die oben genannten Möglichkeiten zur Haftung gebracht werden. Diese Verfahren sind entsprechend kostenintensiv, und es ist häufig ein erhöhter Anteil an Ausschussware zu verzeichnen. Darüber hinaus muss teilweise ein enormer Kostenaufwand zur Kontrolle der richtigen Positionierung der Verbundpartner betrieben werden.

In zweistufigen Verfahren wird in der ersten Stufe zunächst der Thermoplast gespritzt, bei Bedarf mit Primern und/oder Haftvermittelern bzw. Oberflächenmodifikationen versehen und dann die Elastomer-Komponente in einer zweiten Verfahrensstufe aufvulkanisiert. Nachteilig ist auch hier der hohe apparative Aufwand sowie ein zusätzlicher Fertigungsschritt zur Erzielung der gewünschten Haftfestigkeit.

In jüngerer Zeit sind neue Verfahren zur Herstellung von Verbundgegenständen auf Basis von Thermoplasten einerseits und einem Vulkanisat andererseits entwickelt worden.

Aus EP-A-0 344 427 ist es bekannt, für die Herstellung von Verbundgegenständen aus Polyamiden und Kautschukvulkanisaten Spezialkautschuke zu verwenden. Deren Charakter, d.h. deren Funktionalisierung mit Carboxyl- oder Anhydridgruppen, ist für die erfolgreiche Herstellung der Verbundgegenstände nach diesem Verfahren ein essenzielles Element. Gleichzeitig müssen Polyamide verwendet werden, die mehr Amino- als Carboxylgruppen aufweisen. Nachteilig ist an diesem Verfahren, dass derartige Spezialkautschuke üblicherweise deutlich teurer als Standardkautschuke sind und sich auch die Eigenschaften dieser Spezialkautschuke von denen der Standardkautschuke unterscheiden. Insbesondere wird mit derart modifizierten Systemen die Haftung zu den formgebenden Werkzeugbereichen, die üblicherweise aus Metall sind, erhöht und die Entformbarkeit stark beeinträchtigt.

In der EP-A-0 629 653 wird ein Verfahren zur Herstellung von Verbundgegenständen aus mindestens zwei fest miteinander verbundenen Teilstücken aus Vulkanisaten und Polyamiden beschrieben, wobei das Vulkanisat unter üblichen Vulkanisationsbedingungen im Kontakt mit dem Polyamidformkörper aus einer Kautschukmischung hergestellt wird, wobei diese Kautschukmischung essentiellerweise ein peroxidisches Vernetzungssystem und gleichzeitig ein doppelbindungshaltiges Silan enthält. Die erzielten Haftfestigkeitswerte sind zwar gut, das Verfahren ist jedoch mit einigen Nachteilen behaftet. So kann bei einer höheren Konzentration von reaktiven Gruppen in der Kautschukmischung eine unerwünschte Haftung an der bei der Vulkanisation üblicherweise verwendeten Metallform auftreten. Für bestimmte Anwendungszwecke ist es darüber hinaus äußerst nachteilig, dass die Beständigkeit der verwendeten Elastomere gegenüber Ölen, Fetten, Lösungsmitteln und Kraftstoffen, wie z.B. Superbenzin, Diesel oder alkoholhaltigen Kraftstoffen, insbesondere bei höheren Temperaturen unbefriedigend ist.

Aus der DE 197 18 504 A1 ist ein Verfahren zur Herstellung eines festen Verbunds zwischen einem harten thermoplastischen Teilstück auf Basis eines Polyamids und einem weichen Teilstück aus einem vulkanisierten Fluor-Elastomeren bekannt. Kern der Erfindung ist hier der Einsatz von Polyamid-Formmassen, die eine bestimmte mindest Aminoendgruppenanzahl vorweisen und nur in Kombination mit einem Fluor-Elastomeren eingesetzt werden.

Das Interesse an mehrkomponentigen Kunststoff-Kautschuk-Formteilen mit sehr hoher Verbundfestigkeit zwischen der Kunststoff- und der Kautschukkomponente ist für bestimmte Anwendungen sehr hoch, vor allem im Automobilbereich. Bedarf besteht z.B. an abdichtenden Funktionselementen des Kühl- und Ölkreislaufes oder an Bauteilen und Bauteilgruppen, die eine sogenannte Hart-Weich-Charakteristik aufweisen sollen, Dämpfungseigenschaften erfüllen, in Kontakt zu verschiedenen Medien stehen und dabei höheren Temperatur ausgesetzt sind. Als Beispiele hierfür sind Motorlagerungen, Achslagerungen, Ölwannen mit umlaufender Dichtung, Gehäuse- und Ventildeckel mit umlaufender Dichtung, Thermostatgehäuse und andere Baugruppen des Kühlers mit umlaufender Dichtung und sonstige Bauteile mit dämpfenden Elementen, die Schwingungen eines Systems reduzieren sollen.

Die Aufgabe der vorliegenden Erfindung bestand somit darin, ein Mehrkomponenten-System basierend auf einer Kunststoff- und einer Kautschuk-Komponente bereitzustellen, welches die Herstellung von stoffschlüssigen Kunststoff-Kautschuk-Verbundgegenständen mit hoher Verbundfestigkeit ermöglicht. Die Aufgabe bestand ferner darin, ein solches Mehrkomponenten-System bereitzustellen, das nicht zwingend den Einsatz zusätzlicher haftungssteigender Maßnahmen erfordert und dabei Kunststoff-Kautschuk-Verbundgegenstände liefert. Verbundfestigkeit im Sinne der vorliegenden Erfindung liegt vor, wenn die zu trennenden Verbundprüfkörper in einem 90° Schälversuch bei dem Versuch der Trennung der mittels der erfindungsgemäßen Thermoplast-Kautschuk-Mehrkomponenten-Systems zusammengehaltenen Bauteile, die Trennung innerhalb der Kautschuk Komponente, bevorzugt durch Reißen, und nicht an der Grenzfläche zwischen der Thermoplast- und der Kautschuk- Komponente erfolgt.

Lösung der Aufgabe und somit Gegenstand der Erfindung ist die Kombination einer Thermoplast-Komponente mit einer Kautschuk-Komponente, wobei die Thermoplast-Komponente wenigstens ein Vernetzungsadditiv enthält.

Erfindungsgemäß einzusetzende Vernetzungsadditive sind Verbindungen mono- oder bifunktioneller Acrylate, oder mono- oder multifunktioneller Allyle.

Bevorzugter Gegenstand der Erfindung ist ein Mehrkomponenten-System enthaltend
1) eine Thermoplast-Komponente enthaltend wenigstens eine als Vernetzungsadditiv fungierende reaktive Verbindung mit Kohlenstoff-Kohlenstoff Doppelbindungen aus der Gruppe der mono- oder bifunktionellen Acrylatverbindungen oder der mono-, bi- oder multifunktionellen Allylverbindungen,
2) eine Kautschuk-Komponente enthaltend ein oder mehrere Elastomere, wobei diejenigen Elastomere, die mit 30 Gew.% oder mehr in der Kautschuk-Komponente enthalten sind, bezogen auf 100 Gew.% als Summe aller Elastomeren der Kautschuk-Komponente, peroxidisch vulkanisierbar sein müssen.

Überraschenderweise ist es gerade durch die Kombination dieser Einzelkomponenten in dem erfindungsgemäßen Mehrkomponenten-System möglich, eine Verarbeitung zu Kunststoff-Kautschuk Formteilen durchzuführen, die eine besonders hohe Verbundhaftung aufweisen. Die dabei erhaltenen Kunststoff-Kautschuk-Verbund-Formteile zeichnen sich zudem durch Hochtemperatur- und Ölbeständigkeit aus und finden beispielsweise als exzellent dichtende und/oder dämpfende Bauteile Anwendung.

Zur Klarstellung sei angemerkt, dass alle im Rahmen der Erfindung nachfolgend aufgeführten, allgemeinen oder in Vorzugsbereichen genannten Definitionen und Parameter in beliebigen Kombinationen umfasst sind. Im Rahmen der Erfindung wird statt des Oberbegriffs Kunststoff auch der Begriff Thermoplast verwendet.

### Thermoplast-Komponente 1)

Die Thermoplast-Komponente 1) in dem erfindungsgemäßen Mehrkomponentensystem enthält eine oder mehrere Thermoplaste.

Bevorzugte Thermoplaste sind Polyamide, Polyimide, Polyether, Polyester, Polyphenylensulfid (PPS), Polycarbonate und/oder Polyalkylene. Möglich ist der Einsatz eines einzelnen Thermoplasten oder aber auch die Kombination verschiedener Thermoplaste. Besonders bevorzugt werden Polyamide eingesetzt.

Besonders bevorzugt einzusetzende Thermoplasten haben eine Erweichungstemperatur größer gleich 150°C gemeinsam. Ganz besonders bevorzugt werden in der Thermoplast-Komponente 1) solche Thermoplasten mit einer Erweichungstemperatur größer gleich 200°C eingesetzt.

Insbesondere bevorzugt werden in der Thermoplast-Komponente 1) ein oder mehrere Polyamide mit einer Erweichungstemperatur größer gleich 200 °C, insbesondere größer gleich 210°C eingesetzt.

Die erfindungsgemäß insbesondere bevorzugt einzusetzenden thermoplastischen Polyamide können nach verschiedenen Verfahren hergestellt und aus sehr unterschiedlichen Bausteinen synthetisiert werden. Sie können allein eingesetzt werden oder auch als Polyamidformmassen, d.h. in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) zwecks spezieller Einstellung von Eigenschaftskombinationen.

Geeignet sind auch Blends von Polyamiden mit Anteilen anderer Polymere, z.B. von Polyethylen, Polypropylen, ABS (Acrylnitril-Butadien-Styrol-Copolymer), wobei gegebenenfalls ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von verstärkten Polyamiden. Die Vielzahl der Kombinationsmöglichkeiten ermöglicht eine sehr große Zahl von Thermoplast-Komponenten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Besonders bevorzugte Polyamide sind teilkristalline Polyamide, die ausgehend von Diaminen und Dicarbonsäuren und/oder Lactamen mit wenigstens fünf Ringgliedern oder entsprechenden Aminosäuren hergestellt werden können.

Als Monomere können einerseits aliphatische und/oder aromatische Dicarbonsäuren wie Adipinsäure, 2,2,4- und 2,4,4-Trimethyladipinsäure, Azelainsäure, Sebazinsäure, Isophthalsäure oder Terephthalsäure zum Einsatz kommen. Als Monomere kommen andererseits aliphatische und/oder aromatische Diamine wie z.B. Tetramethylendiamin, Hexamethylendiamin, 1,9-Nonandiamin, 2,2,4- und 2,4,4-Trimethyl-hexamethylendiamin, die isomeren Diamino-dicyclohexylmethane, Diaminodicyclohexylpropane, Bis-amino-methyl-cyclohexan, Phenylendiamine, Xylylendiamine, Aminocarbonsäuren, wie z.B. Aminocapronsäure, oder die entsprechenden Lactame in Betracht. Copolyamide aus mehreren der genannten Monomeren sind eingeschlossen.

Für die erfindungsgemäßen Mehrkomponenten-Systeme werden besonders bevorzugt auf Caprolactamen, insbesondere ε-Caprolactam, basierende Polyamide sowie auf PA6, PA66 und auf anderen aliphatischen und/oder aromatischen Polyamiden bzw. Copolyamiden basierende Compounds, bei denen auf eine Polyamidgruppe in der Polymerkette 3 bis 11 Methylengruppen kommen, eingesetzt.

Die erfindungsgemäß einzusetzenden teilkristallinen Polyamide können auch im Gemisch mit anderen Polyamiden und/oder weiteren Polymeren eingesetzt werden.

Den Polyamiden können übliche Additive in der Schmelze zugemischt oder auf der Oberfläche aufgebracht werden.

Übliche Additive sind z.B. Stabilisatoren (wie UV-Stabilisatoren, Thermostabilisatoren oder Gammastrahlenstabilisatoren), Antistatika, Fließhilfsmittel, Entformungsmittel, Flamm-schutzadditive, Emulgatoren, Nukleierungsmittel, Weichmacher, Gleitmittel, Farbstoffe, Pigmente sowie auch Additive zur Erhöhung der elektrischen Leitfähigkeit. Die Additive können alleine oder in Mischung bzw. in Form von Masterbatchen eingesetzt werden.

Als Stabilisatoren können zum Beispiel Metallsalze, insbesondere Kupferverbindungen, sterisch gehinderte Phenole, Hydrochinone, aromatische sekundäre Amine wie z.B. Diphenylamine, substituierte Resorcine, Salicylate, Benzotriazole und Benzophenone, sowie verschiedene substituierte Vertreter dieser Gruppen und deren Mischungen eingesetzt werden.

Als Fließhilfsmittel können beispielsweise niedermolekulare Verbindungen oder verzweigte, hochverzweigte oder dendritische Polymere mit einer dem Polymerharz ähnlichen Polarität eingesetzt werden oder auch Copolymerisate von Olefinen mit Methacrylsäureestern oder Acrylsäureestern aliphatischer Alkohole, die einen MFI (Melt Flow Index) von 50 g/10 min nicht unterschreiten.

Als Pigmente bzw. Farbstoffe können z.B. Titandioxid, Zinksulfid, Ultramarinblau, Eisenoxid, Ruß, Phthalocyanine, Chinacridone, Perylene, Nigrosin oder Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Als Additive zur Erhöhung der elektrischen Leitfähigkeit können Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden.

Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden.

In den erfindungsgemäß einzusetzenden Polyamiden kann ein Füll- oder Verstärkungsstoff enthalten sein. Als Füllstoff oder Verstärkungsstoff können auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische, teilchenförmige Füllstoffe auf der Basis von Talk, Glimmer, Silikat, Quarz, Titandioxid, Wollastonit, Kaolin, amorphen Kieselsäuren, Magnesiumcarbonat, Kreide, Feldspat, Bariumsulfat und/oder Glasfasern eingesetzt. Besonders bevorzugt werden mineralische, teilchenförmige Füllstoffe auf der Basis von Talk, Wollastonit, Kaolin und/oder Glasfasern eingesetzt.

Der Füllstoff und/oder Verstärkungsstoff kann gegebenenfalls oberflächenmodifiziert sein, beispielsweise mit einem Haftvermittler oder einem Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind beispielsweise Silanverbindungen der allgemeine Formel (I)
(I) (X-(CH₂)_{q})ₖ-Si-(O-CᵣH₂ᵣ₊₁)₄₋ₖ
in der die Substituenten folgende Bedeutung haben:
X für NH₂-, HO- oder 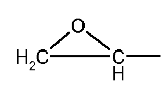 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d₉₇- bzw. d₅₀-Wert aufweisen als die ursprünglich eingesetzten Füllstoffe. Die Durchmesserangaben d₉₇ bzw. d₅₀ bedeuten, dass 97 bzw. 50 Gew. % der Teilchen einen Durchmesser besitzen, der kleiner als der angegebene Wert ist, wobei die Teilchengrößenverteilung mittels Ultrazentrifugation ermittelt wird.

Die Glasfasern können bedingt durch die Verarbeitung zur Formmasse bzw. Formkörper in der Formmasse bzw. im Formkörper kürzere Längenverteilungen als ursprünglich eingesetzt aufweisen.

Die Thermoplast-Komponente zeichnet sich durch hohe Formbeständigkeit auch bei hohen Temperaturen bei einer gleichzeitig hohen Fließfähigkeit aus. Des Weiteren besitzt die Kunststoffkomponente eine hohe Ölbeständigkeit in gängigen Motorenölen sowie industriellen und in Kraftfahrzeugen gebräuchlichen Medien.

Erfindungsgemäß wird der Thermoplast mit einem Vernetzungsadditiv eingesetzt. Bevorzugt dienen als Vernetzungsadditiv mono- oder bifunktionelle Acrylatverbindungen oder mono-, bi-oder multifunktionelle Allylverbindungen.

Bevorzugte mono- oder bifunktionelle Acrylatverbindungen sind Ethylenglycoldimethacrylat, Butandioldimethacrylat, Trimethylolpropantrimethacrylat, Zn-diacrylat, Zn-dimethacrylat Bevorzugte mono-, bi- oder multifunktionelle Allylverbindungen sind Triallylisocyanurat, Triallylcyanurat, Triallyltrimellithat oder 1,2-Polybutadiene. Insbesondere bevorzugt wird erfindungsgemäß Triallylisocyanurat, Triallylcyanurat, Triallyltrimellithat eingesetzt. Insbesondere ganz besonders bevorzugt wird Triallylisocyanurat (TAIC) (C.A. S. No. 1025-15-6) eingesetzt.

Die Gesamtmenge an Vernetzungsadditiv liegt bevorzugt im Bereich von 0,01% bis 20%, besonders bevorzugt im Bereich von 1 bis 5%, ganz besonders bevorzugt im Bereich von 1,5 bis 3 % bezogen auf die Thermoplastkomponente des erfindungsgemäßen Mehrkomponenten-Systems.

### Komponente 2) (Kautschukkomponente)

Die Kautschuk-Komponente 2) in dem erfindungsgemäßen Mehrkomponentensystem enthält eine oder mehrere Elastomere, wobei diejenigen Elastomere, die mit 30 Gew.-% oder mehr in der Kautschuk-Komponente enthalten sind, bezogen auf 100 Gew.% als Summe aller in der Kautschuk-Komponente enthaltenen Elastomere, peroxidisch vulkanisierbar sein müssen.

Bevorzugt zu verwendende Elastomere sind Kautschuke der Reihe
- Nitrilkautschuk NBR
- Hydrierter Nitrilkautschuk HNBR
- Naturkautschuk NR
- Styrolbutadienkautschuk SBR
- Butadienkautschuk BR
- Isoprenkautschuk IR
- Etylenvinylacetatkautschuk EVM
- Etylenpropylenkautschuk EPDM
- Etylen-Acrylatkautschuk AEM
- Acrylatkautschuk ACM
- Fluorkautschuk
- Chloroprenkautschuk
- Chloriertes Polyethylen CM

### Nitrilkautschuke (NBR) und Hydrierte Nitrilkautschuke (HNBR):

Unter Nitrilkautschuken, die auch als NBR abgekürzt werden, werden im Rahmen dieser Anmeldung Polymere mit mindestens zwei Monomeren verstanden, dessen Wiederholungseinheiten mindestens ein konjugiertes Dien, mindestens ein α,β-ungesättigtes Nitril und gegebenenfalls ein oder mehr weitere copolymerisierbare Monomere enthalten.

Nitrilkautschuk und hydrierter Nitrilkautschuk als erste Komponente (i)

In einer alternativen Ausführungsform der vorliegenden Erfindung kann als Elastomer ein Polymer (i) eingesetzt werden, das ein Nitrilkautschuk oder ein hydrierter Nitrilkautschuk ist. Im Rahmen der vorliegenden Erfindung wird der Ausdruck in "Nitrilkautschuk" aber auch der Ausdruck "hydrogenierter Nitrilkautschuk" breit ausgelegt und umfasst gegebenenfalls hydrogenierte Terpolymere mit wiederholenden Einheiten wenigstens eines Diens, entweder konjugiert oder nicht konjugiert (als erstem Monomer (ia)) und wenigstens ein α,β-ungesättigtes Nitril (als zweitem Monomer (ib)). und Gegebenenfalls kann der Nitrilkautschuk bzw. hydrierte Nitrilkautschuk zusätzlich noch eins oder mehrere copolymerisierbare Monomere enthalten.

Als Dienmonomer mit einer Dienmonomereinheit (ia) kann ein konjugiertes Dien mit einer Kohlenstoffzahl von wenigstens 4, bevorzugt 4 bis 6 C-Atome eingesetzt werden. Besonders bevorzugte konjugierte Diene sind 1,3-Butadien, Isopren, 2,3-Dimethyl-1,3-butadien und 1,3-Pentadien. Geeignete nicht konjugierte Diene haben bevorzugt 5 bis 12 C-Atome. Bevorzugt werden 1,4-Pentadien oder 1,4-Hexadien eingesetzt. Konjugierte Diene sind bevorzugt, insbesondere bevorzugt ist 1,3-Butadien.

Als α,β-ethylenisch ungesättigtes Nitril für das zweite Monomer (ib) des Nitrilkautschuks kann jede beliebige α,β-ethylenisch ungesättigte Verbindung eingesetzt werden, solange sie eine Nitrilgruppe enthält. Bevorzugte Verbindungen sind Acrylnitril, α-Haloacrylonitrile, insbesondere α-Chloroacrylnitril und α-Bromoacrylnitril, α-Alkylonitrile, insbesondere Methacrylonitrile oder Ethacrylonitrile. Ganz besonders bevorzugt werden Acrylnitrile und Methacrylnitril eingesetzt. Erfindungsgemäß können aber auch Mischungen verschiedener α,β-ethylenisch ungesättigter Nitrile eingesetzt werden. Der Gehalt an α,β-ethylenisch ungesättigem Nitrilmonomer in solch einem gegebenenfalls hydrierten Nitrilkautschuk ist bevorzugt in von 10 bis 60 Gew.-%, besonders bevorzugt von 15 bis 55 Gew.-% und insbesondere bevorzugt von 20 bis 50 Gew.-% im Hinblick auf 100 Gew.-% der gesamten Monomereinheiten. Werden niedrigere Mengen α,β-ethylenisch ungesättigter Nitrilmonomereinheiten eingesetzt, so verringert sich die Ölwiderstandsfähigkeit des daraus erhaltenen vernetzten Kautschuks. Wird ein zu hoher Gehalt eingesetzt, so reduziert sich die Kälteresistenz des vernetzten Kautschukmaterials.

Zusätzlich zu den konjugierten Dienmonomereinheiten und den α,β-ethylenisch ungesättigen Nitrilmonomereinheiten können die gegebenenfalls hydrierten Nitrilkautschuke gegebenenfalls ein α,β-ethylenisch ungesättiges Dicarbonsäuremonoestermonomer, α,β-ethylenisch ungesättiges Dicarbonsäuremonomer, α,β-ethylenisch ungesättiges Dicarbonsäureanhydridmonomer oder α,β-ethylenisch ungesättiges Dicarbonsäurediester als drittes Monomer enthalten.

Im bevorzugten Verfahren zur Einführung dieser Monomereinheiten und insbesondere von α,β-ethylenisch ungesättigen Dicarbonsäuremonoester-Monomereinheiten in den Nitrilkautschuk (i) werde diese Monomereinheiten und insbesondere der α,β-ethylenisch ungesättigen Dicarbonsäuremonoester, die genannten α,β-ethylenisch ungesättigen Nitrile mit dem konjugierten Dienen copolymerisiert.

Die organische Gruppe des α,β-ethylenisch ungesättigen Dicarbonsäuremonoestermonomers und des α,β-ethylenisch ungesättigen Dicarbonsäurediestermonomers sind über ein Sauerstoffatom, eine Alkylgruppe, eine Cycloalkylgruppe, eine Alkylcycloalkylgruppe oder eine Arylgruppe mit der Carbonylgruppe verbunden, insbesondere die Alkylgruppen sind bevorzugt. Die Zahl der Kohlenstoffatome in der Alkylgruppe liegt üblicherweise im Bereich von 1 bis 10, bevorzugt 2, 3, 4, 5 bis 6. Die Zahl der Kohlenstoffatome der Cycloalkylgruppe liegt üblicherweise im Bereich von 5 bis 12, bevorzugt im Bereich von 6 bis 10. Die Zahl der Kohlenstoffatome in der Alkylcycloalkylgruppe liegt bevorzugt im Bereich von 6 bis 12, besonders bevorzugt im Bereich 7 bis 10. Ist die Zahl der Kohlenstoffatome in der organischen Gruppe zu klein, hat dies Einfluss auf die Verarbeitungsstabilität der zu erhaltenden Kautschukzusammensetzungen. Ist die Zahl der Kohlenstoffatome zu hoch, hat dies Auswirkungen auf die Vernetzungsrate und niedriger vernetztes Material sowie niedrigere mechanische Festigkeit können das Resultat sein. Bevorzugte α,β-ethylenisch ungesättige Dicarbonsäureestermonoester-Monomere sind
- Maleinsäuremonoalkylester, bevorzugt Monomethylmaleat, Monoethylmaleat, Monopropylmaleat oder Mono-n-butylmaleat,
- Maleinsäuremonocycloalkylester, bevorzugt Monocyclopentylmaleat, Monocyclohexylmaleat oder Monoheptylmaleat,
- Maleinsäuremonoalkylcycloalkylester, bevorzugt Monomethylcyclopentylmaleat oder Monoethylcyclohexylmaleat,
- Maleinsäuremonoarylester, bevorzugt Monophenylmaleat,
- Maleinsäurebenzylester, bevorzugt Monobenzylmaleat,
- Fumarsäuremonoalkylester, bevorzugt Monomethylfumarat, Monoethylfumarat, Monopropylfumarat oder Mono-n-butyl-fumarat,
- Fumarsäuremonocycloalkylester, bevorzugt Monocyclopentylfumarat, Monocyclohexylfumarat oder Monocycloheptylfumarat,
- Fumarsäuremonoalkylcycloalkylester, bevorzugt Monomethylcyclopentylfumarat oder Monoethylcyclohexylfumarat,
- Fumarsäuremonoarylester, bevorzugt Monophenylfumarat,
- Fumarsäuremonobenzylester, bevorzugt Monobenzylfumarat,
- 2-Methylmaleinsäuremonoalkylester, bevorzugt 2-Methylmaleinsäuremethylester, 2-Methylmaleinsäurepropylester oder 2-Methylmaleinsäure-n-butylester,
- 2-Methylmaleinsäuremonocycloalkylester, bevorzugt 2-Methylmaleinsäurecyclopentylester, 2-Methylmaleinsäurehexylester oder 2-Methylmaleincycloheptylester,
- 2-Methylmaleinsäuremonoalkylcycloalkylester, bevorzugt 2-Methylmaleinsäuremethylcyclopentylester oder 2-Methylmaleinsäurecyclohexylester,
- 2-Methylmaleinsäuremonoarylester, bevorzugt 2-Methylmaleinsäuremonophenlyester,
- 2-Methylmaleinsäuremonobenzylester, bevorzugt 2-Methylmaleinsäurebenzylester,
- Itaconsäuremonoalkylester, bevorzugt Itaconsäuremethylester, Itaconsäureethylester, Itaconsäurepropylester oder Itaconsäure-n-butylester,
- Itaconsäuremonocycloalkylester, bevorzugt Itaconsäuremonocyclopentylester, Itaconsäuremonocyclohexylester oder Itaconsäuremonoheptylester,
- Itaconsäuremonocycloalkylalkylester, bevorzugt Itaconsäuremonocyclopentylmethylester oder Itaconsäurecyclohexylethylester,
- Itaconsäuremonoarylester, bevorzugt Itaconsäsuremonophenylester,
- Itaconsäuremonobenzylester, bevorzugt Itaconsäuremonobenzylester.

Als α,β-ethylenisch ungesättige Dicarbonsäurediestermonomere können die analogen Diester basierend auf den oben genannten ausführlich beschriebenen Monoestermonomeren eingesetzt werden. Die dabei über ein Sauerstoffatom mit der C=O Gruppe verbundenen organischen Gruppen können dabei gleich oder verschieden sein.

Um einen möglichst geringen Einfluss auf die Monoviskosität (ML 1+4 bei 100°C) der vulkanisierbaren Polymerzusammensetzung zu erhalten, werden Monoester (Monoalkylester, Monocycloalkylester oder Monoalkylcycloalkylester) von Dicarbonsäuren mit Carboxylgruppen an beiden Kohlenstoffatomen, die die α,β-ethylenisch ungesättige Bindung eingehen, bevorzugt. Besonders bevorzugt werden Maleinsäure, Fumarsäure oder 2-Methylmaleinsäure eingesetzt, sodass Monoester der Maleinsäure oder der Fumarsäure insbesondere bevorzugt sind. Als α,β-ethylenisch ungesättige Dicarbonsäuremonomere werden Maleinsäure, Fumarsäure, 2-Methylmaleinsäure oder Itaconsäure bevorzugt. Als ethylenisch ungesättigte Dicarbonsäurenanhydridmonomere werden die Anhydride der oben genannten Säuren, Maleinsäure, Fumarsäure, 2-Methylmaleinsäure oder Itaconsäure bevorzugt. Der Gehalt an α,β-ethylenisch ungesättigen Dicarbonsäuremonoestermonomereinheiten als gegebenenfalls drittem Monomer im Nitrilkautschuk oder im hydrierten Nitrilkautschuk liegt bevorzugt im Bereich von 0,5 bis 20 Gew.-%, besonders bevorzugt im Bereich von 1 bis 15 Gew.-% und insbesondere bevorzugt im Bereich von 1,5 bis 10 Gew.-% in Bezug auf 100 Gew.-% aller Monomereinheiten. Ist der Gehalt an α,β-ethylenisch ungesättigen Dicarbonsäuremonoestermonomereinheiten im Nitrilkautschuk oder im hydrierten Nitrilkautschuk zu gering, hat dies Einfluss auf den Grad der Vernetzung der vulkanisierbaren Polymerzusammensetzung. Ist der Gehalt der α,β-ethylenisch ungesättigen Dicarbonsäuremonoestermonomereinheiten im Nitrilkautschuk oder hydrierten Nitrilkautschuk zu hoch, hat dies Einfluss auf die Ermüdungseigenschaften des erhaltenen Polymervulkanisats und kann Einfluss haben auf verbleibende Carboxylgruppen nach der Vernetzung.

Einen besonders bevorzugten Nitrilkautschuk stellt ein Copolymer aus Acrylnitril und 1,3-Butadien dar.

Neben dem konjugierten Dien und dem α,β-ungesättigten Nitril sowie den α,β-ethylenisch ungesättigen Dicarbonsäuremonoestermonomere, α,β-ethylenisch ungesättigen Dicarbonsäuremonomeren, α,β-ethylenisch ungesättigen Dicarbonsäureanhydridmonomeren oder α,β-ethylenisch ungesättigen Dicarbonsäurediester können noch ein oder mehrere weitere dem Fachmann bekannte Monomere eingesetzt werden, z.B. α,β-ungesättigte Monocarbonsäuren, deren Ester oder Amide. Als α,β-ungesättigte Monocarbonsäuren sind dabei, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl- (meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden Nitrilkautschuken können in weiten Bereichen schwanken. Der Anteil des oder der Summe der konjugierten Diene liegt üblicherweise im Bereich von 40 bis 90 Gew.%, bevorzugt im Bereich von 45 bis 84 Gew. %, bezogen auf das Gesamtpolymer. Der Anteil des oder der Summe der α,β-ungesättigten Nitrile liegt üblicherweise bei 10 bis 60 Gew.-%, bevorzugt bei 16 bis 55 Gew.-%, bezogen auf das Gesamtpolymer. Die Anteile der Monomere summieren sich jeweils zu 100 Gew.% auf. Die zusätzlichen Monomere können in Mengen von 0,1 bis 40 Gew.%, bevorzugt 1 bis 30 Gew.-%, bezogen auf das Gesamtpolymer, vorliegen. In diesem Fall werden entsprechende Anteile des oder der konjugierten Diene bzw. des oder der α,β-ungesättigten Nitrile durch die Anteile der zusätzlichen Monomere ersetzt, wobei sich die Anteile aller Monomere jeweils zu 100 Gew.% aufsummieren.

Der Nitrilkautschuk kann in seiner hydrierten Form eingesetzt werden. Hydrierte Nitrilkautschuke weisen üblicherweise weniger als 30 Mol-% CC-Doppelbindungen auf, bevorzugt 30 bis 0,05 Mol-%, besonders bevorzugt 15 bis 0,06 Mol-%, ganz besonders bevorzugt 10 bis 0,05 Mol-%, insbesondere bevorzugt 7 bis 0,05 Mol-%, insbesondere ganz besonders bevorzugt 5,5 bis 0,05 Mol-%.

Die Hydrierung des Copolymers kann nach Verfahren des Standes der Technik durchgeführt werden. Geeignete Prozesse zur Hydrierung von Nitrilkautschuken werden beschrieben in US 3,700,637, DE-PS 2 539 132, EP-A 134 023, DE-A 3 540 918, EP-A 298 386, DE-A 3 529 252, DE-A 3 433 392, US 4,464,515 und US 4,503,196.

Die Mooney-Viskosität [ML 1+4 bei 100°C] des gegebenenfalls hydrierten Nitrilkautschuks liegt bevorzugt im Bereich 1 bis 200, besonders bevorzugt 1 bis 150, insbesondere bevorzugt 1 bis 120.

Die in den Mehrkomponenten-Systemen verwendbaren hydrierten Nitrilkautschuke besitzen üblicherweise ein Zahlenmittel des Molekulargewicht Mₙ im Bereich von 5.000 bis 300.000, bevorzugt im Bereich von 10.000 bis 300.000 und besonders bevorzugt im Bereich von 12.000 bis 250.000 und insbesondere bevorzugt im Bereich von 12.000 bis 200.000 und ganz besonders bevorzugt im Bereich von 15.000 bis 200.000. Sie besitzen ferner üblicherweise einen Polydispersitätsindex D= M_{w}/Mₙ, wobei M_{w} das Gewichtsmittel und Mₙ das Zahlenmittel des Molekulargewichts darstellt, im Bereich von 1,5 bis 4, bevorzugt im Bereich von 2 bis 4, besonders bevorzugt im Bereich von 2 bis 3,7 und insbesondere im Bereich von 2,2 bis 3,3 und ganz besonders bevorzugt im Bereich von 2,1 bis 3,0.

Das Verfahren zur Herstellung der oben genannten Nitrilkautschuke ist in keiner Weise beschränkt. Generell bevorzugt ist ein Verfahren, worin die α,β-ethylenisch ungesättigen Nitrilmonomere, das α,β-ethylenisch ungesättige Dicarbonsäuremonoestermonomer, das Dienmonomer oder das α-Olefinmonomer und andere Monomere copolymerisiert werden.

Als Polymerisationsverfahren können alle bekannten Emulsionspolymerisationen, Suspensionspolymerisationen, Bulkpolymerisationen und Lösungspolymerisationen angewandt werden, bevorzugt die Emulsionspolymerisation aufgrund der Einfachheit der Kontrolle der Polymerisation. Wenn der Gehalt übrig gebliebener C=C-Doppelbindungen im Copolymer, erhältlich durch Copolymerisation, oberhalb des oben genannten Bereichs liegt, erfolgt die Hydrierung des Copolymers (Hydrogenierung Additionsreaktion). Solche Hydrierungsprozesse werden keinesfalls unterdrückt.

Die Polymere, bevorzugt die oben genanten Elastomere, sind Stand der Technik. Entweder kommerziell erhältlich oder können durch den Fachmann in geeigneter Art und Weise nach Prozessen aus dem Stand der Technik hergestellt werden.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

Hydrierte Nitirilkautschuke sind im Handel erhältlich. Beispiele für hydrierte Nitrilkautschuke sind voll- und teilhydrierte Nitrilkautschuke mit Acrylnitrilgehalten im Bereich von 20 bis 50 Gew.% (Therba^{®}-Palette der Lanxess Deutschland GmbH sowie Zetpol^{®}-Palette der Nippon Zeon Corporation). Geeignete hydrierte Butadien/ Acrylnitril/Acrylat-Polymere umfasst die Therban^{®}LT-Serie der Lanxess Deutschland GmbH, beispielsweise Therban^{®}LT 2157 sowie Therban^{®}LT 2007. Ein Beispiel für carboxylierte hydrierte Nitrilkautschuke ist die Therban^{®}XT-Serie der Lanxess Deutschland GmbH. Ein Beispiel für hydrierte Nitrilkautschuke mit geringen Mooney-Viskositäten und daher verbesserter Verarbeitbarkeit ist ein Produkt aus der Therban^{®} AT-Serie, beispielweise Therban AT 3404.

### • Naturkautschuk NR

Als Elastomer(e) können in der Komponente 2) des erfindungsgemäßen Mehrkomponenten-Systems auch ein oder mehrere NR Kautschuke enthalten sein. Hierbei handelt es sich um natürliche Isopren Kautschuke, bevorzugt aus Plantagenproduktion der Pflanze Hevea Brasiliensis.

NR Kautschuke, die im erfindungsgemäßen Sinn verwendet werden können, sind käuflich erhältlich, z.B. als Produkte aus der Produktreihe SMR (Standard Malaysian Rubber) von PACIDUNIA Sdn. Bhd. oder aber auch nach dem Fachmann geläufigen Methoden herstellbar.

### • Styrolbutadienkautschuk SBR

Als Elastomer(e) können in der Komponente 2) des erfindungsgemäßen Mehrkomponenten-Systems auch ein oder mehrere SBR Kautschuke enthalten sein. Hierbei handelt es sich um StyrolButadien Kautschuke mit gegebenenfalls weiteren Termonomeren.

AEM Kautschuke, die im erfindungsgemäßen Sinn verwendet werden können, sind käuflich erhältlich, z.B. als Produkte aus der Produktreihe der Buna^{®} SE von LANXESS^{®} oder aber auch nach dem Fachmann geläufigen Methoden herstellbar.

### • Butadienkautschuk BR

Als Elastomer(e) können in der Komponente 2) des erfindungsgemäßen Mehrkomponenten-Systems auch ein oder mehrere BR Kautschuke enthalten sein. Hierbei handelt es sich um Butadien Kautschuke mit gegebenenfalls weiteren Co- und/oder Termonomeren.

BR Kautschuke, die im erfindungsgemäßen Sinn verwendet werden können, sind käuflich erhältlich, z.B. als Produkte aus der Produktreihe der Marke Buna^{®} CB von LANXESS^{®} oder aber auch nach dem Fachmann geläufigen Methoden herstellbar.

### • Isoprenkautschuk IR

Als Elastomer(e) können in der Komponente 2) des erfindungsgemäßen Mehrkomponenten-Systems auch ein oder mehrere IR Kautschuke enthalten sein. Hierbei handelt es sich um synthetische Isopren Kautschuke mit gegebenenfalls weiteren Co- und/oder Termonomeren.

IR Kautschuke, die im erfindungsgemäßen Sinn verwendet werden können, sind käuflich erhältlich, z.B. als Produkte aus der Produktreihe der Marke Kraton IR von Kraton Polymers oder aber auch nach dem Fachmann geläufigen Methoden herstellbar.

### Ethylen- Vinylacetat-Copolymere EVM

Als Elastomer(e) können in der Komponente 2) des erfindungsgemäßen Mehrkomponenten-Systems auch ein oder mehrere Ethylen-Vinylacetat-Copolymere auf der Basis von Ethylen und Vinylacetat als Monomere enthalten sein. Üblicherweise kann der Ethylengehalt im Bereich von 5 bis 70 Gew.% liegen, der Vinylacetat-Anteil im Bereich von 95 bis 30 Gew.%.

Ethylen-Vinylacetat-Copolymere, die im erfindungsgemäßen Sinn verwendet werden können, sind käuflich erhältlich, z.B. als Produkte aus der Produktreihe der Marken Levapren^{®} und Levamelt^{®} von der Lanxess Deutschland GmbH, oder aber auch nach dem Fachmann geläufigen Methoden herstellbar.

### EPDM Kautschuke

Als Elastomer(e) können in der Komponente 2) des erfindungsgemäßen Mehrkomponenten-Systems auch ein oder mehrere EPDM Kautschuke enthalten sein.

Hierbei handelt es sich um Polymere, die durch Terpolymerisation von Ethylen und größeren Anteilen Propylen sowie einigen Gew.% eines dritten Monomeren mit Dien-Struktur hergestellt werden. Das Dien-Monomer stellt dabei die für eine sich gegebenenfalls anschließende Vulkanisation benötigten Doppelbindungen bereit. Als Dien-Monomere finden vorwiegend *cis,cis-*1,5-Cyclooctadien (COD), exo-Dicyclopentadien (DCP), endo-Dicyclopentadien (EDCP), 1,4-Hexadien (HX) und auch 5-Ethyliden-2-norbornen (ENB) Verwendung.

EPDM Kautschuke, die im erfindungsgemäßen Sinn verwendet werden können, sind käuflich erhältlich, z.B. als Produkte aus der Produktreihe der Marke Buna EPG^{®} und Buna EPT^{®} von der Lanxess Deutschland GmbH, oder aber auch nach dem Fachmann geläufigen Methoden herstellbar. In den erfindungsgemäßen Mehrkomponenten-Systemen können in der Kautschuk-Komponente auch solche EPDM und EVM Kautschuke eingesetzt werden, welche durch Pfropfung anderer Monomere wie beispielsweise Maleinsäureanhydrid, Maleinsäureanhydridhalbester, Acryl- oder Methacrylsäure oder durch Umsetzung mit Silanen (Hydrosilylierung/Umesterung) modifiziert sind.

### AEM

Als Elastomer(e) können in der Komponente 2) des erfindungsgemäßen Mehrkomponenten-Systems auch ein oder mehrere AEM Kautschuke enthalten sein. Hierbei handelt es sich um Ethylen-Acrylat Kautschuke mit gegebenenfalls weiteren Termonomeren.

AEM Kautschuke, die im erfindungsgemäßen Sinn verwendet werden können, sind käuflich erhältlich, z.B. als Produkte aus der Produktreihe der Marke Vamac® von DuPont™ oder aber auch nach dem Fachmann geläufigen Methoden herstellbar.

### ACM

Als Elastomer(e) können in der Komponente 2) des erfindungsgemäßen Mehrkomponenten-Systems auch ein oder mehrere ACM Kautschuke enthalten sein. Hierbei handelt es sich um Polyacrylate, d.h. ein Copolymer bzw. Terpolymer aus Ethylacrylat und anderen Acrylaten mit einem gewissen Anteil eines Monomers, welches die Vulkanisation ermöglicht. ACM wird mittels radikalisch initierter Emulsionspolymerisation hergestellt.

ACM Kautschuke, die im erfindungsgemäßen Sinn verwendet werden können, sind käuflich erhältlich, z.B. als Produkte aus der Produktreihe der Marke Hytemp^{®} und Nipol AR^{®} von Zeon Chemicals L.P.oder aber auch nach dem Fachmann geläufigen Methoden herstellbar.

In einer bevorzugten Ausführungsform erhält die Kautschuk-Komponente 2) des erfindungsgemäßen Mehrkomponentensystems neben ein oder mehreren Elastomeren wenigstens einen peroxidischen Vernetzer.

Als peroxidischer Vernetzer wird bevorzugt wenigstens ein Vernetzer der Reihe
- Bis(2,4-dichlorbenzyl)peroxid
- Dibenzoylperoxid
- Bis(4-chlorbenzoyl)peroxid
- 1,1 -Bis-(t-butylperoxy)-3,3,5-trimethylcylohexan
- tert.-Butylperbenzoat
- 2,2-Bis(t-butylperoxy) buten und
- 4,4-di-tert.Butyl peroxynonylvalerat
- tert.-Butylperbenzoat
- 2,2-Bis(t-butylperoxy)-buten
- 4,4-di-tert.Butylperoxynonylvalerat
- Dicumylperoxid
- 2,5-Dimethyl-2,5-di(t-butylperoxy)-hexan
- tert.-Butylcumylperoxid
- 1,3-Bis(t-butylperoxy isopropyl)-benzol
- Di-t-butylperoxid und
- 2,5-Dimethyl-2,5-di(t-butylperoxy)-hexyn-3
eingesetzt.

Es können aber auch Kombinationen peroxidischer Vernetzer eingesetzt werden. Erfindungsgemäß bevorzugte Kombinationen sind 1,3-Bis-(t-butylperoxy isopropyl)-benzol und 1,1-Bis-(t-butylperoxy)-3,3,5-trimethylcylohexan, tert.- Butylperbenzoat und Di-t-butylperoxid, 1,3-Bis-(t-butylperoxy isopropyl)-benzol und Di-t-butylperoxid sowie tert.-Butylperbenzoat und tert.-Butylcumylperoxid.

Die Gesamtmenge an peroxidischem(n) Vernetzer(n) liegt üblicherweise im Bereich von 1 bis 20 phr, bevorzugt 2 bis 18 phr und besonders bevorzugt 2 bis 16 phr, bezogen auf die Summe der Elastomere in der Kautschuk-Komponente (2) des erfindungsgemäßen Mehrkomponenten-Systems.

Die Kautschuk-Komponente 2) des erfindungsgemäßen Mehrkomponentensystems kann neben ein oder mehreren Elastomeren sowie den genannten peroxidischen Vernetzern auch übliche Kautschukadditive enthalten.

Diese schließen beispielsweise ein:
Füllstoffe, Füllstoffaktivatoren, Beschleuniger, Ozonschutzmittel, Antioxidationsmittel, Verarbeitungshilfsmittel, Extenderöle, Weichmacher, Verstärkungsmaterialien, Formtrennmittel sowie Anvulkanisationshemmer.

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform),oder Silikate eingesetzt werden.

Als Füllstoffaktivatoren kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxy-silan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr der Elastomere(n) in der Kautschuk-Komponente 2).

Als Alterungsschutzmittel kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Dipenylamin (DDA), octyliertes Diphenylamin (OCD) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiaminen. Es können auch Kombinationen der genannten Alterungsschutzmittel eingesetzt werden.

Die Alterungsschutzmittel werden üblicherweise in Mengen von ca. 0 bis 5 phr, bevorzugt 0,5 bis 3phr, bezogen auf 100 phr der Elastomer(e) in der Kautschuk-Komponente 2) eingesetzt.

Als Formtrennmittel kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr der Elastomer(e) in der Kautschuk-Komponente 2) eingesetzt.

Auch die Verstärkung der Vulkanisate mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Eine beispielhafte Aufstellung von in der Kautschukindustrie üblichen Beimengungen findet man z.B. im SGF Rubber Handbook des schwedischen Instituts für Gummi Technologie, 10 Auflage.

Es kann vorteilhaft sein, neben diesen peroxidischen Vernetzern noch weitere Aktivatoren in der Kautschukkomponente einzusetzen: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimethylolpropantrimethacrylat, Zn-diacrylat, Zn-dimethacrylat, 1,2-Polybutadien oder N,N'-m-phenylendimaleinimid geeignet.

Gegenstand der Erfindung ist ferner die Verwendung des erfindungsgemäßen Mehrkomponenten-Systems zur Herstellung eines Thermpolastkautschuk-Verbund-Formteils. Gegenstand der vorliegenden Erfindung sind aber auch Thermoplastkautschuk-Verbund-Formteile erhältlich durch Einsatz eines Mehrkomponenten-Systems enthaltend
1) eine Thermoplast-Komponente enthaltend wenigstens eine als Vernetzungsadditiv fungierende reaktive Verbindung mit Kohlenstoff-Kohlenstoff Doppelbindungen aus der Gruppe der mono- oder bifunktionellen Acrylatverbindungen oder der mono-, bi- oder multifunktionellen Allylverbindungen und
2) eine Kautschuk-Komponente enthaltend ein oder mehrere Elastomere, wobei diejenigen Elastomere, die mit 30 Gew.% oder mehr in der Kautschuk-Komponente enthalten sind, bezogen auf 100 Gew.% als Summe aller Elastomeren der Kautschuk-Komponente, peroxidisch vulkanisierbar sein müssen.

Zum Nachweis der erfindungsgemäß beschriebenen Verbesserungen wurden zunächst durch Compoundierung entsprechende Kunststoff-Formmassen angefertigt. Die einzelnen Komponenten wurden in einem Zweiwellenextruder (ZSK 26 Mega Compounder der Fa. Coperion Werner & Pfleiderer, Stuttgart, Deutschland) bei Temperaturen zwischen 260 und 320°C gemischt, als Strang in ein Wasserbad ausgetragen, bis zur Granulierfähigkeit abgekühlt, granuliert und anschließend in einem Trockenlufttrockner (90°C, 3 Stunden) getrocknet. Die Zugabe des Vernetzungsadditives kann während des Compoundierprozesses, oder bei späterer Verarbeitung auch als Trockenmischung (Gemisch aus Kunststoffgranulat und Vernetzungsadditiv) geschehen. Ferner sind auch weitere Techniken zum Auftragen des Vernetzungsadditives auf die Oberfläche der Kunststoffkomponente denkbar, bevorzugt mittels Besprühen oder Aufpinseln.

Aus den Bestandteilen der Kautschuk-Komponente 2) wird eine Formmasse hergestellt. Die Mischung der wesentlichen Bestandteile kann dabei je nach Temperatur unter Verwendung der typischen in der Kautschukindustrie gängigen Mischapparaturen erfolgen. Einsetzbar sind sowohl diskontinuierlich mischende Aggregate in Form von Mischwalzen oder Innenmischern als auch kontinuierlich mischende Aggregate wie Mischextruder. Es hat sich bewährt darauf zu achten, dass die Mischung der Bestandteile der Kautschuk-Komponente 2) bei einer Temperatur erfolgt, bei der keine vorzeitige Vernetzung stattfindet.

Die Herstellung des Thermoplastkautschuk-Verbundgegenstands kann üblicherweise in einem zweistufigen oder einstufigen Verfahren erfolgen. Beim zweistufigen Prozess wird zunächst das steife, thermoplastische Formteil beispielsweise durch Extrudieren oder Spritzgießen hergestellt und in einem weiteren Schritt mit der Kautschukmischung mittels Extrusion, Spritzguß oder durch Pressen beaufschlagt und dem Vulkanisationsbedingungen des Kautschuks ausgesetzt. Die Fertigung kann dabei auch mit einer Maschine erfolgen, die bevorzugt über eine Wendeplatte oder einen Drehteller verfügt, und/oder über entsprechende Werkzeugtechnik, bevorzugt mittels Schiebern, die zeitlich verzögert Bereiche der Kavität für die zweite Komponente freigeben.

Beim Einsatz einer Maschine, die über eine Wendeplatte, einen Drehteller oder ein Werkzeug, das über einen oder mehrere Schieber verfügt, wird üblicherweise in einem ersten Takt ein Vorspritzling aus der thermoplastischen Komponente 1) in einer Kavität des Werkzeuges hergestellt. Nach einer Drehbewegung des Werkzeuges, oder mittels Umsetztechnik, wird der Vorspritzling in eine geometrisch veränderte Fertigspritzstation gebracht (beispielsweise mittels der Drehtechnik durch eine Drehung um 180° bzw. 120° bei Dreikavitätenwerkzeugen) und in einem zweiten Takt wird die Kautschuk-Komponente 2) eingespritzt. Nach Erreichen der Entformungsstabilität der Kautschuk-Komponente kann entformt werden. Die Schmelzetemperaturen der thermoplastischen Komponente 1) liegen tendenziell im Bereich von 180 bis 340 °C, bevorzugt im Bereich von 200 bis 300 °C Die Werkzeugtemperaturen der thermoplastischen Temperierbereiche liegen üblicherweise im Bereich von 20 bis 200 °C, bevorzugt im Bereich von 60 bis 150°C. Geeignete Massetemperaturen der Kautschuk-Komponente 2) im Plastifizierzylinder liegen im allgemeinen Bereich von 20 bis 150 °C, vorzugsweise von 60 bis 100°C. Geeignete Vulkanisationstemperaturen, liegen üblicherweise im Bereich von 120 bis 200°C, bevorzugt im Bereich von 140 bis 190°C. Eine Temperung erfolgt tendenziell bei einer Temperatur im Bereich von 120 bis 200°C, bevorzugt bei einer Temperatur größer oder gleich 140°C.

Diese Werte sind im Wesentlichen stark abhängig von der Bauteilgeometrie (z.B. der Dicke), sowie von den spezifischen Materialkennwerten. Die Nachdruckphase liegt tendenziell in Bereichen von 0 bis 3000 bar bei Nachdruckzeiten von 0 Sekunden bis zum Öffnen des Werkzeuges.

Die erhaltenen Thermoplastkautschuk-Verbundgegenstände zeichnen sich durch hohe Haftfestigkeiten aus, so dass es im Testfall in der Regel zu einem Kohäsionsbruch der Kautschuk-Komponente kommt.

Gegenstand der Erfindung ist somit die Verwendung des erfindungsgemäßen Mehrkomponenten-Systems zur Herstellung von Thermoplastkautschuk-Verbundgegenständen, bevorzugt von abdichtenden oder dämpfenden Funktionselementen, Bauteilen oder Bauteilgruppen des Kühl- oder Ölkreislaufs von Automobilen oder allgemein Bauteilen oder Bauteilgruppen, die eine Hart-Weich-Charakteristik aufweisen, in Kontakt zu verschiedenen Medien stehen und/oder dabei höheren Temperatur ausgesetzt sind.

Beispielsweise lässt sich das erfindungsgemäße Mehrkomponenten-System einsetzen zur Herstellung von Zylinderdeckeln mit umlaufender Dichtung, Ölwannen mit umlaufender Dichtung, Zahnriemenabdeckungen mit umlaufender Dichtung, Kettenabdeckungen mit umlaufender Dichtung, Motorgehäusen mit Dichtungen, Thermostatgehäusen mit umlaufender Dichtung, Wasserkästen mit Dichtungen, Kühlern mit Dichtungen, Öl-Modulen mit Dichtungen, Luftansaugstutzen mit Abdichtungen, Gehäusedeckeln mit Dichtungen, Ventildeckeln mit Dichtungen, gummibeschichteten Walzen, Flanschen, Rohr- und Schlauchkupplungen, Dichtungsrahmen, Dichtungen, Laufrollen oder von Strukturbauteilen mit Dämpfelementen und weiteren Baugruppen mit dämpfenden Funktionen wie z.B. Motorlagerungen oder Achslager.

Durch den Einsatz des erfindungsgemäßen Mehrkomponenten-Systems wird bei der Herstellung der Verbundgegenstände die Entformbarkeit des Verbundes nicht nachteilig beeinträchtigt, wie es üblicherweise zu beobachten ist, wenn Kautschuk-Komponenten verwendet werden, die eine Funktionalisierung oder Modifizierung zur Haftfestigkeitssteigerung durch höhere Konzentration von reaktiven Gruppen aufweisen.

Überraschenderweise wurde gefunden, dass die Verbundfestigkeit von Thermoplastkautschuk-Verbund-Formteilen durch den Einsatz der reaktiven Verbindungen im Thermoplasten deutlich gesteigert wird.

Durch die Verwendung des erfindungsgemäßen Mehrkomponentensystems ist es für eine Haftung zwischen den Komponenten nicht mehr zwingend erforderlich, zusätzliche Vorbehandlungen zur Haftungssteigerung einzusetzen.

### Experimenteller Teil:

### 1. Für die thermoplastische, harte Komponente werden folgende Formmassen verwendet:

1.1 Handelsübliches PA6.6 mit 30 Gew.-% Kurzglasfasern (Hersteller: Lanxess Deutschland GmbH)

1.2 Analog zu 1.1; Handelsübliches PA6.6 mit 30 Gew.-% Kurzglasfasern und 2 Gew.-% Triallylisocyanurat (TAIC) . Das handelsübliche PA6.6 wird während der Compoundierung zusätzlich mit 2 Gew.-% TAIC versehen.

1.3 Analog zu 1.1; Handelsübliches PA6.6 mit 30 Gew.-% Kurzglasfasern und 3 Gew.-% Triallylisocyanurat (TAIC). Das handelsübliche PA6.6 wird während der Compoundierung zusätzlich mit 3 Gew.-% TAIC versehen.

### 2. Für die Kautschukkomponete werden folgende Basispolymere verwendet:

2.1 Hydrierte Nitrilkautschuke (HNBR)

Therban AT A3401 der Fa. Lanxess Deutschland GmbH.

2.2 Ethylen-Vinylacetat-Copolymere

Levapren^{®} 600 HV der Firma Lanxess Deutschland GmbH

### 3. Kautschukcompounds:

Die verwendeten Basispolymere der Kautschukkomponente werden mit verschiedenen, üblichen Zusatzstoffen gemischt. Die Zusammensetzung der Compounds ist in der Tabelle 1 wiedergegeben.

**Tabelle 1: Zusammensetzung der Kautschukmischung**

| Beispiel | 3.1 | 3.2 | 3.3 | 3.4 | 3,5 |
|---|---|---|---|---|---|
| Basispolymer 2.1 | 100,00 | 100 | | | |
| Basispolymer 2.2 | | | 100,00 | 100 | 100 |
| Corax^{®} N550 | 50 | 50 | 45 | 45 | 45 |
| Luovomaxx^{®} CDPA | 1,1 | 1,1 | | | |
| Vulkanox^{®} ZMB2 | 0,4 | 0,4 | | | |
| Vulkanox^{®} HS (TMQ) | | | 1,5 | 1,5 | 1,5 |
| Maglite^{®} DE | | | 2 | 2 | 2 |
| Diplast 8-10 | 10 | 10 | | | |
| Rhenogran^{®} CaO-80 | | | 3 | 3 | 3 |
| Stearinsäure Edenor^{®} C18 | | | 1,5 | 1,5 | 1,5 |
| Aflux^{®} 18 | | | 1,5 | 1,5 | 1,5 |
| TAIC-70 | 2,1 | 2,1 | 4 | 4 | 4 |
| Trigonox^{®} 29-40 | 20 | | 12 | | |
| Trigonox^{®} 17-40 | | 20 | | 12 | |
| Perkadox^{®} BC-40 | | | | | 12 |

| | | | | | |
|---|---|---|---|---|---|
| Erläuterungen zu Tabelle 1: **Corax^{®} N550** Ruß N550, verfügbar von Evonik - Degussa GmbH **Luovomaxx^{®} CDPA** 4,4-Bis(1,1-dimethylbenzyl)-diphenylamin, verfügbar von Lehmann & Voss & Co. **Vulkanox^{®}ZMB2** Methyl-2-mercaptobenzimidazol Zink Salz, verfügbar von LANXESS Deutschland **Vulkanox^{®} HS (TMQ)** 2,2,4-Trimethyl-1,2-dihydro-chinolin, verfügbar von LANXESS Deutschland **Maglite^{®} DE** Magnesium Oxid, verfügbar von Lehmann & Voss & Co. **Diplast^{®} 8-10** Trimillitatester von linearen C₈-C₁₀-Alkoholen, verfügbar von Lonza SpA **Rhenogran^{®} CaO-80** Kaziumoxid eingebettet in EVA, 80% activ, verfügbar von Rheinchemie Rheinau **Edenor^{®} C18** Stearinsäure, verfügbar von Cognis **Aflux^{®} 18** Primäres Fettamin, verfügbar von Rheinchemie Rheinau **TAIC-70** Triallylisocyanurat geträgert auf Kieselsäure, 70% activ, verfügbar von Kettlitz Chemie GmbH & Co. **Trigonox^{®} 29-40** 1,1Bis(tert-butylperoxy)-3,3,5-trimethylcyclohexan geträgert auf Kieselsäure, 40% activ, verfügbar von Akzo Nobel Cehmicals GmbH **Trigonox^{®} 17-40** Butyl 4,4-di(tert-butylperoxy)valerate geträgert auf Kieselsäure, 40% activ, verfügbar von Akzo Nobel Cehmicals GmbH **Perkadox^{®} BC-40** Dicumylperoxid geträgert auf Kieselsäure, 40% activ, verfügbar von Akzo Nobel Cehmicals GmbH | | | | | |

### Herstellung der Verbundprobekörper:

Zum Nachweis der Steigerung der Haftfestigkeit durch die erfindungsgemäße Werkstoffmodifikation, werden im Mehrkomponentenspritzgussprozess Verbundprobekörper hergestellt. Verwendet wird eine Zweikomponentenspritzgussmaschine und als Spritzgusswerkzeug ein 2 Kavitäten Drehtellerwerkzeug.

Dazu wird der Thermoplast in die erste Kavität des Spritzgusswerkzeuges eingespritzt und eine 60mm x 68mm x 4mm Platte hergestellt. Nach Ablauf der Kühlzeit, öffnet das Werkzeug und das thermoplastische Formteil wird um 180° gedreht und befindet sich dann in der zweiten Kavität, in der der Kautschuk dann überspritzt wird. Die Kautschukkavität hat die Abmaße 140mm x 24mm x 6mm und bildet einen Überlapp zur Thermoplastplatte von 44,5mm x 24mm.

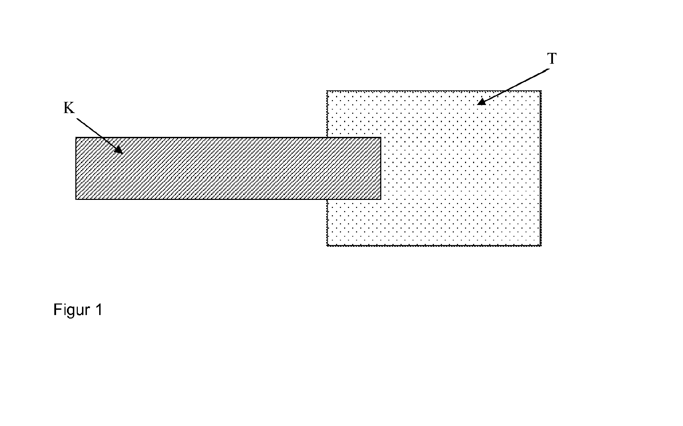

Nach dem Einspritzvorgang der Kautschukkomponente und dem Vulkanisationsprozess im Spritzgusswerkzeug wird anschließend das Werkzeug geöffnet und der Verbundprobekörper kann entnommen werden. Figur 1 zeigt einen erfindungsgemäßen Zweikomponenten-Verbundkörper, worin K für Kautschukomponente und T für Thermoplast steht.

Anschließend wird der so hergestellte Verbundprobekörper in einem Schälversuch der Haftfestigkeitsprüfung unterzogen.

### Prüfung der Verbundfestigkeit mittels Schälversuch:

Nach einer Lagerung der Verbundprüfkörper von mindestens 24 Stunden werden diese zur Prüfung der Verbundfestigkeit einem 90° Schälversuch unterzogen. Der Schälversuch wird in Anlehnung an DIN 53 289 durchgeführt. Hierbei wird der Verbundprüfkörper unter einem Winkel von 90° in eine Zugprüfmaschine mit spezieller Vorrichtung zur Aufnahme der Thermoplastkomponente eingespannt und auf Zug belastet. Die Vorkraft beträgt 0,3N, die Prüfgeschwindigkeit 200mm/min. Die maximale Verbundfestigkeit ergibt sich aus der maximal gemessenen Kraft in N bezogen auf die Breite der Elastomerkomponente von 24mm.

Die Ergebnisse sind in der Tabellen 2 aufgeführt.

**Tabelle 2: Ergebnisse der Schälversuche in Anlehnung an DIN 53289 für die verschiedenen Werkstoffkombination.**

| **Beispiel** | **Kautschk** | **Thermoplast** | **Verbundfestigkeit in N/mm** |
|---|---|---|---|
| **4.1** | **3.1** | **1.1** | **10** |
| **4.2** | **3.1** | **1.2** | **15,9*** |
| **4.3** | **3.1** | **1.3** | **15,9*** |
| **4.4** | **3.2** | **1.1** | **4** |
| **4.5** | **3.2** | **1.2** | **12*** |
| **4.6** | **3.2** | **1.3** | **12*** |
| **4.7** | **3.3** | **1.1** | **4,2** |
| **4.8** | **3.3** | **1.2** | **7,9*** |
| **4.9** | **3.3** | **1.3** | **8*** |
| **4.10** | **3.4** | **1.1** | **5,5** |
| **4.11** | **3.4** | **1.2** | **7,2*** |
| **4.12** | **3.4** | **1.3** | **7,2*** |
| **4.13** | **3.5** | **1.1** | **1,4** |
| **4.14** | **3.5** | **1.3** | **7,2*** |

| | | | |
|---|---|---|---|
| * Kohäsionsbruch in der Kautschukkomponente | | | |

Bei allen Versuchen mit den erfindungsgemäßen Werkstoffmodifikationen (Thermoplast-komponente 1.2 und 1.3) lag ein Kohäsionsbruch in der Kautschukkomponente vor und nicht in der Grenzfläche zwischen Thermoplast und Kautschuk.

Mit der Vergleichsformmasse 1.1 (ohne Werkstoffmodifikation) können hingegen keine ausreichend hohen Verbundfestigkeiten erreicht werden, d.h. die Trennung erfolgte in der Grenzfläche zwischen Thermoplast und Kautschuk (Beispiel 4.1, 4.4, 4.7, 4.10, 4.13).

## Patentansprüche

1. Mehrkomponenten-System enthaltend
1) eine Thermoplast-Komponente enthaltend wenigstens eine als Vernetzungsadditiv fungierende reaktive Verbindung mit Kohlenstoff-Kohlenstoff Doppelbindungen aus der Gruppe der mono- oder bifunktionellen Acrylatverbindungen oder der mono-, bi- oder multifunktionellen Allylverbindungen,
2) eine Kautschuk-Komponente enthaltend ein oder mehrere Elastomere, wobei diejenigen Elastomere, die mit 30 Gew.% oder mehr in der Kautschuk-Komponente enthalten sind, bezogen auf 100 Gew.% als Summe aller Elastomeren der Kautschuk-Komponente, peroxidisch vulkanisierbar sein müssen.

2. Mehrkomponenten-System gemäß Anspruch 1, wobei die Thermoplast-Komponente 1) eine oder mehrere Thermoplaste, bevorzugt ein oder mehrere Polyamide, Polyalkylene, Polyimide, Polyether, Polyester, Polyphenylensulfid (PPS) und/oder Polycarbonate aufweist.

3. Mehrkomponenten-System gemäß Anspruch 2, wobei die Thermoplast-Komponente 1) ein oder mehrere Polyamide mit einer Erweichungstemperatur größer gleich 200 °C, insbesondere größer gleich 210°C enthält.

4. Mehrkomponenten-System gemäß einem oder mehreren der Ansprüche 1 bis 3, wobei die Kautschuk-Komponente 2) ein oder mehrere Elastomere ausgewählt aus der Gruppe umfassend Nitrilkautschuke, hydrierte Nitrilkautschuke, EVM, EPDM, AEM, ACM, Fluorkautschuke, Chloroprenkautschuke, Naturkautschuke, SBR, BR, IR und chloriertes Polyethylen enthält.

5. Mehrkomponenten-System gemäß einem oder mehreren der Ansprüche 1 bis 4, wobei die Kautschuk-Komponente 2) des erfindungsgemäßen Mehrkomponenten-Systems neben ein oder mehreren Elastomeren wenigstens einen peroxidischen Vernetzer enthält.

6. Mehrkomponenten-System gemäß Anspruch 5, **dadurch gekennzeichnet, dass** als peroxidische Vernetzer Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2-Bis-(t-butylperoxy) buten, 4,4-di-tert.Butyl-peroxynonylvalerat, tert-Butylperbenzoat, 2,2 Bis(t-butylperoxy)-buten, 4,4-di-tert.-Butylperoxynonylvalerat, Dicumylperoxid, 2,5-Dimethyl-2,5-di(t-butylperoxy)-hexan, tert-Butylcumyl-peroxid, 1,3-Bis(t-Butylperoxy isopropyl)-benzol, Di-t-butylperoxid oder 2,5-Dimethyl-2,5-di(t-butylperoxy)-hexyn-3 eingesetzt werden.

7. Mehrkomponenten-System gemäß einem oder mehreren der Ansprüche 1 bis 6, **dadurch gekennzeichnet, dass** es sich bei der reaktiven Verbindung mit Kohlenstoff-Kohlenstoff Doppelbindungen bevorzugt um Trimethylolpropan-tri(meth)acrylat, Ethylenglycoldimethacrylat, Butandioldimethacrylat, Trimethylolpropantrimethacrylat, Zn-diacrylat, Zn-dimethacrylat ,Triallylisocyanurat, Triallylcyanurat, Triallyltrimellithat handelt.

8. Mehrkomponentensysteme gemäß der Ansprüche 1-7, **dadurch gekennzeichnet, dass** es sich bei der reaktiven Verbindung mit Kohlenstoff-Kohlenstoff Doppelbindungen um Triallylisocyanurat, Triallylcyanurat, Triallyltrimellithat handelt

9. Verwendung des Mehrkomponenten-Systems gemäß einem oder mehreren der Ansprüche 1-7 zur Herstellung eines Thermoplast-Kautschuk Verbund-Formteils.

10. Verwendung des Mehrkomponenten-Systems gemäß Anspruch 8 zur Herstellung von abdichtenden und/oder dämpfenden Funktionselementen, Bauteilen oder Bauteilgruppen des Kühl- oder Ölkreislaufs von Automobilen.

11. Verwendung des Mehrkomponenten-Systems gemäß Anspruch 8 oder 9 zur Herstellung von Zylinderdeckeln mit umlaufender Dichtung, Ölwannen mit umlaufender Dichtung, Zahnriemenabdeckungen mit umlaufender Dichtung, Kettenabdeckungen mit umlaufender Dichtung, Motorgehäusen mit Dichtungen, Thermostatgehäusen mit umlaufender Dichtung, Wasserkästen mit Dichtungen, Kühlern mit Dichtungen, Öl-Modulen mit Dichtungen, Luftansaugstutzen mit Abdichtungen, Gehäusedeckeln mit Dichtungen, Ventildeckeln mit Dichtungen, gummibeschichteten Walzen, Flanschen, Rohr- und Schlauchkupplungen, Dichtungsrahmen, Dichtungen, Laufrollen oder von Strukturbauteilen mit Dämpfelementen.

12. Verfahren zur Herstellung von Thermoplastkautschuk-Verbund-Formteilen unter Einsatz des Mehrkomponenten-Systems

13. Thermoplastkautschuk-Verbund-Formteile erhältlich durch Einsatz eines Mehrkomponenten-Systems enthaltend
1)eine Thermoplast-Komponente enthaltend wenigstens eine als Vernetzungsadditiv fungierende reaktive Verbindung mit Kohlenstoff-Kohlenstoff Doppelbindungen aus der Gruppe der mono- oder bifunktionellen Acrylatverbindungen oder der mono-, bi- oder multifunktionellen Allylverbindungen und
2)eine Kautschuk-Komponente enthaltend ein oder mehrere Elastomere, wobei diejenigen Elastomere, die mit 30 Gew.% oder mehr in der Kautschuk-Komponente enthalten sind, bezogen auf 100 Gew.% als Summe aller Elastomeren der Kautschuk-Komponente, peroxidisch vulkanisierbar sein müssen.
